# EUROPÄISCHE PATENTSCHRIFT

(11) **EP 1 477 815 B1**
(45) Veröffentlichungstag und Bekanntmachung des Hinweises auf die Patenterteilung: **26.07.2006**
(21) Anmeldenummer: 04010407.7
(22) Anmeldetag: 03.05.2004
(51) Int. Cl.: G01N 35/10

(54) **Vorrichtung zum präzisen Anfahren von Mikroplatten-Wells**
Device for precisely approaching microplate wells
Dispositif pour s'approcher précisément des puits d'une microplaque

(30) Priorität: 14.05.2003 CH 8392003
(43) Veröffentlichungstag der Anmeldung: 17.11.2004
(73) Patentinhaber: Tecan Trading AG, 8708 Männedorf (CH)
(72) Erfinder: Ingenhoven, Nikolaus, 8708 Männerdorf (CH); Wiggli, Markus, 8632 Tann ZH (CH); Zuppiger, Adi, 8854 Siebnen (CH)
(74) Vertreter: OK pat AG

(56) Entgegenhaltungen:
- EP-A- 0 046 461
- WO-A-02/059626
- DE-A- 4 134 713
- DE-U- 20 006 547
- DE-U- 20 116 511
- US-A- 3 568 735
- US-A- 4 734 261
- US-A- 5 306 510

## Beschreibung

Die Erfindung betrifft gemäss dem Oberbegriff des unabhängigen Anspruchs 1 eine Vorrichtung zum Positionieren von zumindest zwei sich im wesentlichen parallel zu einander erstreckenden und vertikal in einer Z-Richtung ausgerichteten Objekten gegenüber Wells einer im wesentlichen horizontal angeordneten Mikroplatte, wobei jedes dieser Objekte individuell an je einer Zahnstange aufgenommen ist und diese Zahnstangen im wesentlichen gleich wie diese Objekte ausgerichtet und entlang einer sich im wesentlichen horizontal in einer Y-Richtung verlaufenden Achse in einem Achsabstand neben einander angeordnet sind. Diese Zahnstangen sind zudem individuell über einen Z-Verfahrweg im wesentlichen vertikal beweglich ausgebildet, indem sie mit je einem motorisch individuell angetriebenen, eine Anpresskraft auf die jeweilige Zahnstange ausübenden Ritzel eines Z-Antriebs im Eingriff stehen. Dabei umfassen die Zahnstangen zwei seitlich in Y-Richtung abstehende und sich in Z-Richtung erstreckende Z-Schienen, welche in Z-Führungen eines zugeordneten, das individuelle Ritzel tragenden Käfigs gleitend gelagert sind. Die Zahnstangen sind zusammen mit dem jeweils zugeordneten Käfig neben einander entlang der sich in Y-Richtung im wesentlichen horizontal ausdehnenden Achse alternierend so angeordnet, dass die Käfige abwechselnd vor oder hinter der Achse liegen. Die Z-Schienen der gleich orientierten Zahnstangen sind jeweils auf einer im wesentlichen horizontalen Linie angeordnet, die parallel zu der Achse und zwischen dieser und den Zähnen der Zahnstangen verläuft. Der Achsabstand der Zahnstangen ist in Y-Richtung mittels Y-Antrieben variierbar und das Zahnstangenpaket ist in eine Kompaktstellung mit einem minimalen Achsabstand bringbar, welcher im wesentlichen dem Gitterabstand der Wells dieser Mikroplatte entspricht.

Arbeitsplattformen zum Behandeln von Flüssigkeiten, wie zum Beispiel das Pipettieren von Flüssigkeiten aus Behältern und zum Verteilen derselben in den Wells einer Mikroplatte weisen gattungsgemässe Vorrichtungen auf und sind z.B. aus WO 02/059626 A1 bekannt. Es hat sich gezeigt, dass die Genauigkeit, mit der z.B. eine Pipettenspitze an einem Ort auf einer marktüblichen Arbeitsplattform automatisiert positionierbar ist, nicht ausreicht um die Wells einer Mikroplatte mit 1536 Wells routinemässig präzise anzufahren. Bei einer zu grossen Fehlertoleranz besteht die Gefahr, dass die Pipettenspitze, der Temperaturfühler, die pH-Sonde, oder ein anderes, längliches, dünnes Objekt, das in einem Well positioniert werden soll, durch ein Anstossen an die Wände des Wells bzw. die Oberfläche der Mikroplatte beschädigt wird. Zudem besteht bei einem unsanften Zusammenstoss eines solchen Objekts mit der Mikroplattenoberfläche die Gefahr eines Probenverlustes, einer Kontaminierung der Nachbarproben und des Arbeitsplatzes. Ein präzises Anfahren der Wells, bei dem keine Gefahr einer ungewollten Berührung von Teilen der Mikroplatte besteht, ist deshalb eine Grundvoraussetzung für ein routinemässiges Arbeiten mit einem Liquid-Handling-System, das z.B. zum automatischen Untersuchen von Blutproben eingesetzt werden kann.

Eine Aufgabe der vorliegenden Erfindung ist es somit, eine Vorrichtung bereit zu stellen, mit welcher die Wells einer 1536-er Mikroplatte mit einem länglichen, dünnen Objekt routinemässig präzise angefahren werden können.

Diese Aufgabe wird gemäss dem kennzeichnenden Teil des unabhängigen Anspruchs 1 dadurch gelöst, dass eine eingangs beschriebene Vorrichtung verbessert wird, indem zumindest jede zweite Zahnstange an derselben befestigte, bzw. angeordnete Abstandhalter umfasst, welche in der Kompaktstellung des Zahnstangenpakets mit je einer sich in Z-Richtung erstreckenden Schiene der Nachbarstangen zum Definieren des minimalen Achsabstandes beaufschlagt sind. Zusätzliche, bevorzugte erfinderische Merkmale ergeben sich aus den abhängigen Ansprüchen.

Messungen der Reproduzierbarkeit des wiederholten Anfahrens von bestimmten Punkten in einem einer Mikroplatte entsprechenden Messsystem haben ergeben, dass mit der erfindungsgemässen Vorrichtung und einem Achsabstand der Pipettenspitzen von 9 mm die Fehlertoleranz kleiner oder gleich +/- 100 µm ist. Damit werden die Anforderungen für das sichere Anfahren der Wells einer 1536-er Mikroplatte erreicht. Die gestellte Aufgabe ist somit gelöst.

Die erfindungsgemässe Vorrichtung wird nun an Hand von schematischen, den Umfang der Erfindung nicht beschränkenden Zeichnungen von beispielhaften Ausführungsformen im Detail erläutert. Dabei zeigen:
- Fig. 1: einen Horizontalschnitt durch ein Zahnstangenpaket einer Vorrichtung gemäss einer ersten, erfindungsgemässen Ausführungsform;
- Fig. 2A: eine Frontalansicht des Zahnstangenpakets einer Vorrichtung gemäss der ersten, erfindungsgemässen Ausführungsform, mit Abstandhaltern in einer Position gemäss einer ersten Variante;
- Fig. 2B: eine Frontalansicht des Zahnstangenpakets einer Vorrichtung gemäss der ersten, erfindungsgemässen Ausführungsform, mit Abstandhaltern in einer Position gemäss einer zweiten Variante;
- Fig. 3A: eine Frontalansicht des Zahnstangenpakets einer Vorrichtung gemäss einer zweiten, erfindungsgemässen Ausführungsform, mit Abstandhaltern in einer Position gemäss einer ersten Variante;
- Fig. 3B: eine Frontalansicht des Zahnstangenpakets einer Vorrichtung gemäss einer dritten, erfindungsgemässen Ausführungsform, mit Abstandhaltern in einer Position gemäss einer zweiten Variante;
- Fig. 4: eine vergrösserte Ansicht entsprechend den Fig. 2 und 3, mit eingesetzten Pipettenspitzen und Mikroplatten mit 96, 384 und 1536 Wells;
- Fig. 5: eine schematische 3D-Ansicht eines System zum Liquid-Handling mit einer Arbeitsfläche und mit einem Zahnstangenpaket einer erfindungsgemässen Vorrichtung;
- Fig. 6: einen Horizontalschnitt durch ein Zahnstangenpaket einer Vorrichtung gemäss einer vierten, fünften und sechsten, erfindungsgemässen Ausführungsform;
- Fig. 7A: eine Frontalansicht des Zahnstangenpakets einer Vorrichtung gemäss einer sechsten erfindungsgemässen Ausführungsform, mit zusätzlichen Abstandhaltern in einer Position gemäss einer zweiten Variante;
- Fig. 7B: eine Frontalansicht des Zahnstangenpakets einer Vorrichtung gemäss einer siebten erfindungsgemässen Ausführungsform, mit Abstandhaltern in einer Position gemäss einer zweiten Variante.

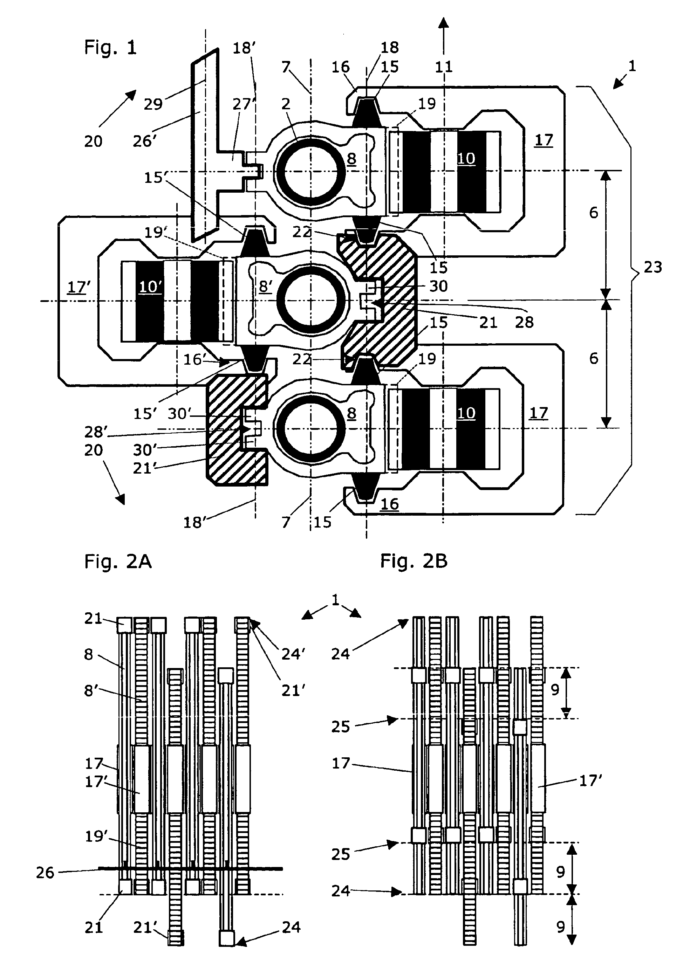

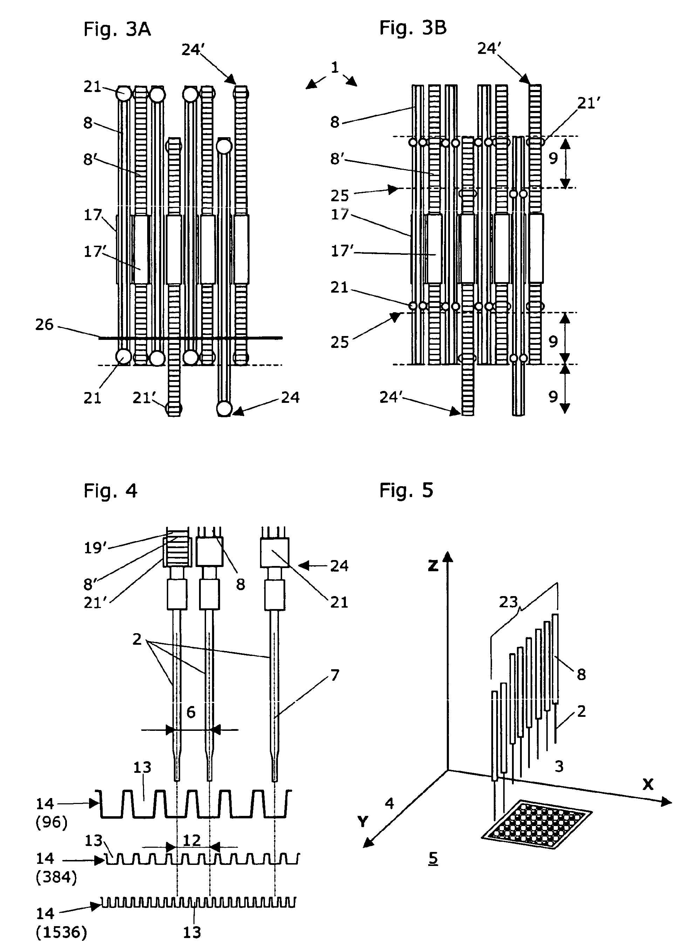

Figur 1 zeigt einen Horizontalschnitt durch eine Vorrichtung gemäss einer ersten, erfindungsgemässen Ausführungsform. Diese Vorrichtung 1 dient zum Positionieren von Objekten 2 gegenüber einer im wesentlichen horizontalen, eine Längsausdehnung 3 in X-Richtung und eine Querausdehnung 4 in Y-Richtung aufweisenden Arbeitsfläche 5 (vgl. auch Fig. 5). Die Vorrichtung 1 ist zum Bewegen der Objekte 2 in zumindest einer im wesentlichen senkrecht zur Arbeitsfläche 5 stehenden Z-Richtung ausgebildet und umfasst mindestens zwei sich in einem Achsabstand 6 neben einander in Z-Richtung erstreckende Zahnstangen 8,8' zum Aufnehmen je eines zu bewegenden Objekts 2. Zu bewegende Objekte sind im Allgemeinen länglich und dünn und erstrecken sich in Z-Richtung. Typische Objekte sind z.B. Referenzspitzen zum gegenseitigen Einstellen bzw. Ausrichten von Mikroplatten und anderen Gefässen in Bezug auf ein Koordinatensystem eines Liquid-Handling-Systems, welches eine Arbeitsfläche 5 umfasst. Auch Dispenserspitzen und Pipettenspitzen sind solche Objekte, wobei z.B. auch Sprühnadeln als Dispenserspitzen bezeichnet werden. Fixe Stahlkanülen, Wegwerfspitzen aus Kunststoff und sogenannte "ZipTips™" (Millipore Corporation, 80 Ashby Road, Bedford, Massachusetts 01730-2271, U.S.A.) werden hier als beispielhafte Pipettenspitzen bezeichnet. Elektroden, Temperatur-Fühler, pH-Sonden und optische Fasern gehören ebenfalls zu den bevorzugten zu positionierenden Objekten.

Die Zahnstangen 8,8' sind über einen Z-Verfahrweg 9 beweglich ausgebildet, in dem sie mit je einem motorisch individuell angetriebenen, eine Anpresskraft auf die jeweilige Zahnstange 8,8' ausübenden Ritzel 10,10' eines Z-Antriebs 11 im Eingriff stehen. Die Zahnstangen 8,8' umfassen zwei seitlich in Y-Richtung abstehende und sich in Z-Richtung erstreckende Z-Schienen 15,15', welche in Z-Führungen 16,16' eines zugeordneten, das individuelle Ritzel 10,10' tragenden Käfigs 17,17' gleitend gelagert sind. Die Zahnstangen 8,8' sind zusammen mit dem jeweils zugeordneten Käfig 17,17' neben einander entlang einer sich in Y-Richtung ausdehnenden Achse 7 alternierend so angeordnet, dass die Käfige 17,17' abwechselnd vor oder hinter der Achse 7 liegen. Die Z-Schienen 15,15' der gleich orientierten Zahnstangen 8,8' sind jeweils auf einer Linie 18,18' angeordnet, die parallel zu der Achse 7 und zwischen dieser und den Zähnen 19,19' der Zahnstangen 8,8' verläuft.

Der Achsabstand 6 der Zahnstangen 8,8' ist in Y-Richtung mittels Y-Antrieben 20 variierbar und das Zahnstangenpaket 23 ist in eine Kompaktstellung mit einem minimalen Achsabstand 6 bringbar, welcher im wesentlichen dem Gitterabstand 12 von Wells 13 einer Mikroplatte 14 entspricht (vgl. Fig. 4). Bevorzugt werden zwei Motoren als Y-Antriebe verwendet.

In einer einfachen ersten Ausführungsform der erfindungsgemässen Vorrichtung umfasst zumindest jede zweite Zahnstange 8,8' an derselben befestigte, bzw. angeordnete Abstandhalter 21,21', 31,31',31" welche in der Kompaktstellung des Zahnstangenpakets 23 mit einer sich in Z-Richtung erstreckenden Schiene 15',15, 30,30' der Nachbarstangen 8',8 zum Definieren des minimalen Achsabstandes 6 beaufschlagt sind. Dabei sind die Abstandhalter 21,21' bevorzugt so ausgebildet, dass sie nur von beiden Seiten durch eine Z-Schiene einer Nachbarstange beaufschlagt werden. In einer verbesserten ersten Ausführungsform einer erfindungsgemässen Vorrichtung umfasst jede Zahnstange 8,8' an derselben befestigte bzw. angeordnete Abstandhalter 21,21', welche in der Kompaktstellung des Zahnstangenpakets 23 mit einer Z-Schiene (15',15) der Nachbarstangen (8',8) zum Definieren des minimalen Achsabstandes (6) beaufschlagt sind.

Fig. 2 zeigt in Frontalansichten von Zahnstangenpaketen eine Vorrichtung gemäss der ersten, erfindungsgemässen Ausführungsform: Die Abstandhalter 21,21' sind zum Ausbilden einer Linienberührung mit einer Z-Schiene 15',15 quaderförmig ausgebildet. Vorzugsweise sind die Abstandhalter 21,21' als durch die Z-Schienen 15',15 der Nachbarstangen 8',8 gleitend beaufschlagbare, fixierte Elemente ausgebildet.

Fig. 2A zeigt diese Ausführungsform mit Abstandhaltern in einer Position gemäss einer ersten Variante: Um eine grösstmögliche Bewegung der Zahnstangen 8,8' in Z-Richtung zu ermöglichen, sind die Abstandhalter 21,21' vorzugsweise im Bereich der Enden 24,24' der Zahnstangen 8,8' angeordnet.

Fig. 2B zeigt diese Ausführungsform mit Abstandhaltern in einer Position gemäss einer zweiten Variante: Um eine gegenseitige Beaufschlagung praktisch aller Abstandhalter 21,21' und Z-Schienen 15,15' permanent zu gewährleisten, sind die Abstandhalter 21,21' zumindest um annähernd den Betrag des Z-Verfahrweges 9 der Zahnstangen 8,8' von deren Enden 24,24' entfernt angeordnet. Diese Variante hat allerdings den Nachteil, dass der totale Z-Verfahrweg 9 etwas reduziert wird. Eine Anordnung der Abstandhalter in einem Zwischenbereich (vgl. Anspruch 12) könnte einen günstigen Kompromiss darstellen.

Fig. 3A zeigt eine Frontalansicht eines Zahnstangenpakets mit Abstandhaltern einer zweiten erfindungsgemässen Ausführungsform, in der die Abstandhalter 21,21' zum Ausbilden einer Punktberührung mit einer Z-Schiene 15',15 zylinderförmig ausgebildet sind: Um eine grösstmögliche Bewegung der Zahnstangen 8,8' in Z-Richtung zu ermöglichen, sind die Abstandhalter 21,21' vorzugsweise im Bereich der Enden 24,24' der Zahnstangen 8,8' angeordnet. Die fixen Zylinder befinden sich in der Fig. 2A entsprechenden Position der Abstandhalter 21,21', in einer Position gemäss einer ersten Variante. Abweichend von dieser Darstellung kann auch eine ovale oder sonst wie von einer Zylinderform abweichende, gebogene Oberfläche der Abstandhalter gewählt werden.

Fig. 3B zeigt eine Frontalansicht eines Zahnstangenpakets mit Abstandhaltern einer dritten erfindungsgemässen Ausführungsform, in der die Abstandhalter 21,21' zum Ausbilden einer Punktberührung mit einer Z-Schiene 15',15 drehbar und rollenförmig ausgebildet sind. Die als drehbare Rollelemente ausgebildeten Abstandhalter 21,21' befinden sich dabei in einer Position gemäss einer zweiten Variante: Um eine gegenseitige Beaufschlagung praktisch aller Abstandhalter 21,21' und Z-Schienen 15,15' permanent zu gewährleisten, sind die Abstandhalter 21,21' zumindest um annähernd den Betrag des Z-Verfahrweges 9 der Zahnstangen 8,8' von deren Enden 24,24' entfernt angeordnet. Diese Variante hat allerdings den Nachteil, dass der totale Z-Verfahrweg 9 etwas reduziert wird. Eine Anordnung der Abstandhalter in einem Zwischenbereich (vgl. Anspruch 12) könnte einen günstigen Kompromiss darstellen.

Alternativ zu diesen Darstellungen mit fixen Abstandhaltern gemäss Fig. 2 oder drehbaren Abstandhaltern gemäss Fig. 3 die alle eine fixe Position auf den Zahnstangen 8,8' einnehmen, können verschiebbare Abstandhalter 21,21' gemäss Anspruch 13 vorgesehen werden. Diese würden den Z-Verfahrweg 9 nicht limitieren, sie brächten aber eine zusätzliche Toleranz mit in das System, so dass die Führung der Z-Schienen 15',15 etwas weniger exakt wäre.
Die eben und an Hand der Figuren 2 und 3 beschriebenen Abstandhalter 21,21' weisen vorzugsweise in Z-Richtung verlaufende Vertiefungen 22,22' auf (vgl. Fig. 1), welche an das Profil der Z-Schienen 15',15 der Nachbarstangen angepasst sind, so dass diese Z-Schienen 15',15 im wesentlichen spielfrei in diesen Vertiefungen 22,22' liegen, wenn sich das Paket 23 der Zahnstangen 8,8' in der Kompaktstellung mit minimalem Achsabstand 6 befindet.

In den Figuren 2A und 3A sind zudem Kämme 26,26' eingezeichnet, welche die Vorrichtung 1 vorzugsweise zusätzlich oder als Alternative zu den gezeigten Abstandhaltern 21,21' umfassen kann. Diese Kämme 26,26' erstrecken sich im wesentlichen in Y-Richtung und umfassen Finger 27,27', welche in ihrer Dimension zumindest teilweise an sich in Z-Richtung erstreckende Zwischenräume 28,28' der Zahnstangen 8,8' angepasst sind und welche durch Drehung der Kämme 26,26' um ihre Achse 29,29' in diese Zwischenräume 28,28' eingreifen. Diese Drehung kann manuell oder motorisch getrieben und über eine Computersteuerung kontrolliert ausgeführt werden. Alternativ kann ein Kamm manuell eingesteckt werden. Nach dem Eindrehen der Finger 27,27' dieser Kämme 26,26' sind alle erfassten Zahnstangen 8,8' zumindest in Y-Richtung gegenseitig blockiert und können mit sehr wenig Spiel vorzugsweise gemeinsam oder individuell abgesenkt oder angehoben werden. Durch den Einsatz eines solchen Kammes 26,26' wird also die individuelle Z-Verfahrbarkeit der Zahnstangen, die sonst in den Ausführungsformen gemäss den Figuren 2 und 3 gegeben ist, gegebenenfalls aufgehoben. Dieses Aufheben der individuellen Z-Verfahrbarkeit wird nur dann bewerkstelligt, wenn die Finger absolut spielfrei in die U-Schiene oder in die Räume zwischen den Zahnstangen eingreifen. Der dabei fix eingestellte Achsabstand 6 der Zahnstangen 8,8' in der Kompaktstellung des Zahnstangenpakets 23 entspricht im wesentlichen dem Gitterabstand 12 der Wells 13 einer Mikrcplatte 14 mit 96, mit 384 oder mit 1536 Wells, wobei aus Fertigungsgründen vorzugsweise der Gitterabstand einer 96-er Platte von 9 mm als kleinster Achsabstand 6 gewählt wird.

Fig. 4 zeigt eine vergrösserte Ansicht entsprechend den Fig. 2 und 3, mit eingesetzten Pipettenspitzen 2 und Mikroplatten 14 mit 96, 384 und 1536 Wells. Dabei wird deutlich, dass die Vorrichtung 1 alle Wells 13 eine 96-er Platte gleichzeitig bzw. ohne Verfahren der Zahnstangen 8,8' in X- oder Y-Richtung erreichen kann.

Durch den reduzierten Gitterabstand 12 der Wells 13 wird mit einer Vorrichtung 1 mit einem minimalen Achsabstand 6 von 9 mm in einer 384-er Platte nur jedes zweite Well, also alle geraden oder ungeraden Nummern gleichzeitig getroffen. Bei einer 1536-er Mikroplatte ist es nur noch jedes vierte Well, d.h. zum Beispiel die Wells 1, 5, 9 etc.. Ohne Einsatz eines Kammes 26,26', also bei voller individueller Beweglichkeit aller Zahnstangen 8,8' wird vorzugsweise durch einen zwei Antriebsmotoren (nicht gezeigt) aufweisenden Y-Antrieb 20, der von zwei Seiten auf das Zahnstangenpaket 23 einwirkt, permanent eine definierte Kraft in positiver und negativer Y-Richtung auf die Zahnstangen 8,8' ausgeübt, so dass die Zahnstangen 8,8' in der Kompaktstellung sich von beiden Seiten beaufschlagen.

In jedem Falle sind eine oder mehrere Vorrichtungen 1 vorzugsweise in ein Liquid-Handling-System mit mindestens einer Arbeitsfläche 5 integriert, welches einen oder mehrere Prozessoren zur Steuerung aller notwendigen Bewegungen der Zahnstangen umfasst. Fig. 5 zeigt eine schematische 3D-Ansicht eines solchen Systems zum Liquid-Handling mit einer Arbeitsfläche 5 und mit einer erfindungsgemässen Vorrichtung 1. Die Zuordnung der rechtwinklig zu einander stehenden Achsen X und Y ist willkürlich und kann auch vertauscht werden. Die Zuordnung der auf der durch X und Y definierten Arbeitsfläche 5 senkrecht stehenden Z-Achse ist unveränderbar.

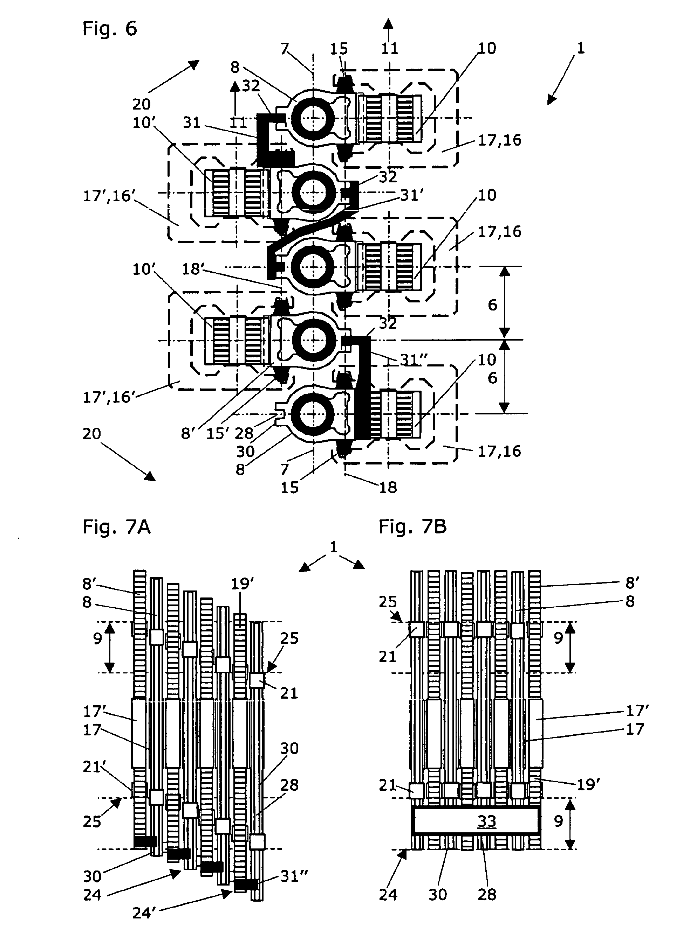

Fig. 6 zeigt einen Horizontalschnitt durch ein Zahnstangenpaket einer Vorrichtung 1 gemäss einer vierten, fünften und sechsten, erfindungsgemässen Ausführungsform. In jedem Falle umfasst jede Zahnstange 8,8' an derselben befestigte, bzw. angeordnete Abstandhalter 31,31',31", welche in der Kompaktstellung des Zahnstangenpakets 23 mit einer U-Schiene 30',30 der Nachbarstangen 8',8 zum Definieren des minimalen Achsabstandes 6 im Eingriff beaufschlagt sind. Zudem umfassen diese Ausführungsformen zum zusätzlichen Verringern des Spiels der Zahnstangen untereinander vorzugsweise das Vorsehen von zusätzlichen Abstandhaltern 21,21' in einer Position gemäss einer zweiten Variante (vgl. Fig. 2B).
Gemäss der vierten Ausführungsform weist der Abstandhalter 31 die Form eines "C" auf, wobei ein Schenkel dieses "C" seitlich an der Zahnstange 8' befestigt ist und der andere Schenkel in den Zwischenraum 28 der sich in Z-Richtung erstrekkenden U-Schiene 30 der Nachbarstange 8 eingreift.

Gemäss der fünften Ausführungsform weist der Abstandhalter 31' die Form eines "Z" auf, wobei ein Schenkel dieses "Z" im Bereich der U-Schiene 30 der Zahnstange 8 befestigt ist und der andere Schenkel in den Zwischenraum 28 der sich in Z-Richtung erstreckenden U-Schiene 30 der Nachbarstange 8' eingreift.

Gemäss der sechsten Ausführungsform weist der Abstandhalter 31" die Form eines "L" auf, wobei der lange Schenkel dieses "L" im Bereich der Zähne 19 der Zahnstange 8 befestigt ist und der kurze Schenkel in den Zwischenraum 28 der sich in Z-Richtung erstreckenden U-Schiene 30 der Nachbarstange 8' eingreift.

Fig. 7A zeigt eine Frontalansicht des Zahnstangenpakets einer Vorrichtung gemäss einer sechsten erfindungsgemässen Ausführungsform. Die Abstandhalter 31" sind nahe dem unteren Ende der Zahnstangen 8,8' angeordnet, damit die mit diesen Abstandhaltern erreichbare Verriegelung der Zahnstangen möglichst weit unten und von den in Z-Richtung unbeweglichen Käfigen 17,17' mit den Z-Führungen 16,16' entfernt statt findet. Die einzelnen Zahnstangen 8,8' des Pakets 23 befinden sich in einer gestaffelten Z-Position, in welcher jeweils eine Einfahröffnung (nicht gezeigt) für den kurzen Schenkel des "L"-förmigen Abstandhalters 31" in den U-Schienen 30 durch Verringern des Achsabstandes 6 in Y-Richtung angefahren werden kann. Zum Verriegeln der Zahnstangen unter einander werden die Zahnstangen dann auf die gleiche Z-Position abgesenkt, so dass der kurze Schenkel des "L"-förmigen Abstandhalters 31" zwischen beiden hier vorhandenen U-Schienen 30 eingreift. Nun können alle verriegelten Zahnstangen 8,8' miteinander angehoben oder abgesenkt werden, wobei die Abstandhalter 21,21' zusätzlich das Spiel der Zahnstangen untereinander reduzieren. In der Staffelposition können die Zahnstangen 8,8' auch wieder gesteuert und motorisch getrieben, d.h. automatisiert von einander getrennt werden, in dem der Achsabstand 6 der Zahnstangen 8,8' vergrössert wird. Somit umfasst die Vorrichtung 1 Abstandhalter 31,31',31" mit Rückhaltestegen 32, welche in einer bestimmten gegenseitigen Z-Position von zwei benachbarten Zahnstangen 8,8' in den Zwischenraum 28,28' der U-Schiene 30',30 der Nachbarstange 8',8 einfahrbar sind.

Abweichend von der bisher beschriebenen vierten, fünften und sechsten Ausführungsform kann die mit dem Rückhaltesteg 32 der Abstandhalter 31,31',31" jeweils zu durchfahrende U-Schiene 30,30' soweit fehlen, dass nur das unterste in seiner Dimension dem Rückhaltesteg 32 entsprechende Stück anwesend ist. Dies hat den Vorteil, dass die Zahnstangen mit den fest montierten Abstandhaltern 31,31',31" mit grösstmöglicher Freiheit unabhängig von einander bewegt werden können.

Fig. 7B zeigt eine Frontalansicht des Zahnstangenpakets einer Vorrichtung gemäss einer siebten erfindungsgemässen Ausführungsform, mit Abstandhaltern in einer Position gemäss einer zweiten Variante. Alle miteinander zu verriegelnden Zahnstangen sind durch eine massive Platte 33 miteinander verbunden. Dies hat den Vorteil, dass die Zahnstangen im unteren, heiklen Bereich exakt und unbeweglich miteinander verbunden sind. Nachteilig kann sein, dass die Platte 33 von Hand montiert und demontiert werden muss. Zudem umfasst auch diese Ausführungsform zum zusätzlichen Verringern des Spiels der Zahnstangen untereinander vorzugsweise das Vorsehen von zusätzlichen Abstandhaltern 21,21' in einer Position gemäss einer zweiten Variante (vgl. Fig. 2B).

Abweichend von den gezeigten und beschriebenen Darstellungen können die Zahnstangen 8,8' auch Mehrfachobjekte aufnehmen. Z.B. können dies Mehrfachpipetten sein, die zwei oder mehr Spitzen umfassen, welche in X-Richtung - also rechtwinklig zur Achse 7 - in einer Linie kammartig aneinander gereiht sind. Das selbe gilt auch für die anderen vorzugsweise durch die Zahnstangen aufzunehmenden Objekte, wie Referenzspitzen, Dispenserspitzen, Pipettenspitzen, Elektroden, Temperatur-Fühler, pH-Sonden, optische Fasern und dergleichen längliche Objekte.

Auch kann das Wirkprinzip der Z-Schienen 15,15' und Z-Führungen 16,16' umgekehrt werden, indem die Käfige 17,17' kürzere Z-Schienen umfassen, die in an den Zahnstangen 8,8' angebrachten Z-Führungen 16,16' gleiten. Allgemein können die Z-Schienen 15,15', die Abstandhalter 21,21', 31,31',31" mit den Zahnstangen 8,8' einstückig gefertigt oder an diesen befestigt sein. Auch eine Kombination der Abstandhalter 21,21' mit anderen bisher nicht gezeigten Ausrüstungsteilen an den Zahnstangen 8,8' ist möglich.

Vorzugsweise umfasst die Vorrichtung 1 eine Sensoreinrichtung (nicht gezeigt), welche anzeigt bzw. der Computersteuerung mitteilt, ob das Zahnstangenpaket 23 verriegelt ist oder nicht. So kann verhindert werden, dass den Y-Antrieben 20 von einem Operateur oder von einer automatischen Steuerung der Befehl erteilt wird, dass der Achsabstand 6 der Zahnstangen 8,8' verändert werden soll.

### Bezugszeichenliste

| | | | |
|---|---|---|---|
| | | 17,17' | Käfig |
| 1 | Vorrichtung | 18,18' | Linie |
| 2 | Objekte | 19,19' | Zähne |
| 3 | Längsausdehnung | 20 | Y-Antriebe |
| 4 | Querausdehnung | 21,21' | Abstandhalter |
| 5 | Arbeitsfläche | 22,22' | Vertiefungen |
| 6 | Achsabstand | 23 | Zahnstangenpaket |
| 7 | Achse | 24,24' | Zahnstangenenden |
| 8,8' | Zahnstangen | 25 | um 9 entfernte Punkte |
| 9 | Z-Verfahrweg | 26,26' | Kämme |
| 10,10' | Ritzel | 27,27' | Finger |
| 11 | Z-Antrieb | 28,28' | Zwischenräume |
| 12 | Gitterabstand | 29,29' | Achse der Kämme |
| 13 | Wells | 30 | U-Schiene |
| 14 | Mikroplatte | 31,31'31" | Abstandhalter |
| 15,15' | Z-Schienen | 32 | Rückhaltestege |
| 16,16' | Z-Führungen | 33 | Platte |

## Patentansprüche

1. Vorrichtung (1) zum Positionieren von zumindest zwei sich im wesentlichen parallel zu einander erstreckenden und vertikal in einer Z-Richtung ausgerichteten Objekten (2) gegenüber Wells (13) einer im wesentlichen horizontal angeordneten Mikroplatte (14), wobei jedes dieser Objekte (2) individuell an je einer Zahnstange (8,8') aufgenommen ist und diese Zahnstangen (8,8'):
• im wesentlichen gleich wie diese Objekte (2) ausgerichtet und entlang einer sich im wesentlichen horizontal in einer Y-Richtung verlaufenden Achse (7) in einem Achsabstand (6) neben einander angeordnet sind;
• individuell über einen Z-Verfahrweg (9) im wesentlichen vertikal beweglich ausgebildet sind, indem sie mit je einem motorisch individuell angetriebenen, eine Anpresskraft auf die jeweilige Zahnstange (8,8') ausübenden Ritzel (10,10') eines Z-Antriebs (11) im Eingriff stehen;
• zwei seitlich in Y-Richtung abstehende und sich in Z-Richtung erstreckende Z-Schienen (15,15') umfassen, welche in Z-Führungen (16,16') eines zugeordneten, das individuelle Ritzel (10,10') tragenden Käfigs (17,17') gleitend gelagert sind;
• zusammen mit dem jeweils zugeordneten Käfig (17,17') neben einander entlang der sich in Y-Richtung im wesentlichen horizontal ausdehnenden Achse (7) alternierend so angeordnet sind, dass die Käfige (17,17') abwechselnd vor oder hinter der Achse (7) liegen;
wobei die Z-Schienen (15,15') der gleich orientierten Zahnstangen (8,8') jeweils auf einer im wesentlichen horizontalen Linie (18,18') angeordnet sind, die parallel zu der Achse (7) und zwischen dieser und den Zähnen (19,19') der Zahnstangen (8,8') verläuft;
und wobei der Achsabstand (6) der Zahnstangen (8,8') in Y-Richtung mittels Y-Antrieben (20) variierbar und das Zahnstangenpaket (23) in eine Kompaktstellung mit einem minimalen Achsabstand (6) bringbar ist, welcher im wesentlichen dem Gitterabstand (12) der Wells (13) dieser Mikroplatte (14) entspricht,
**dadurch gekennzeichnet, dass** zumindest jede zweite Zahnstange (8,8') an derselben angeordnete, durch die Z-Schienen (15',15) der Nachbarstangen (8',8) beaufschlagbare Abstandhalter (21,21',31,31', 31") umfasst, von denen jeder an nur einer Zahnstange (8,8') befestigt ist, wobei diese Abstandhalter (21,21',31,31', 31") in der Kompaktstellung des Zahnstangenpakets (23) zumindest mit einer sich in Z-Richtung erstreckenden Schiene (15',15, 30,30') der Nachbarstangen (8',8) zum Definieren des minimalen Achsabstandes (6) beaufschlagt sind.

2. Vorrichtung (1) nach Anspruch 1, **dadurch gekennzeichnet, dass** jede Zahnstange (8,8') an derselben angeordnete Abstandhalter (21,21') umfasst, welche in der Kompaktstellung des Zahnstangenpakets (23) mit je einer Z-Schiene (15',15) der Nachbarstangen (8',8) zum Definieren des minimalen Achsabstandes (6) beaufschlagt sind.

3. Vorrichtung (1) nach Anspruch 1, **dadurch gekennzeichnet, dass** jede Zahnstange (8,8') an derselben angeordnete Abstandhalter (31,31',31") umfasst, welche in der Kompaktstellung des Zahnstangenpakets (23) mit einer U-Schiene (30',30) der Nachbarstangen (8',8) zum Definieren des minimalen Achsabstandes (6) im Eingriff beaufschlagt sind.

4. Vorrichtung (1) nach einem der Ansprüche 1 oder 2, **dadurch gekennzeichnet, dass** die Abstandhalter (21,21') als durch die Z-Schienen (15',15) der Nachbarstangen (8',8) gleitend beaufschlagbare, fixierte Elemente ausgebildet sind.

5. Vorrichtung (1) nach Anspruch 4, **dadurch gekennzeichnet, dass** die Abstandhalter (21,21') zum Ausbilden einer Linienberührung mit einer Z-Schiene (15'15) in ihrer Frontalansicht quaderförmig ausgebildet sind.

6. Vorrichtung (1) nach Anspruch 4, **dadurch gekennzeichnet, dass** die Abstandhalter (21,21') zum Ausbilden einer Punktberührung mit einer Z-Schiene (15',15) in ihrer Frontalansicht zylinderförmig ausgebildet sind.

7. Vorrichtung (1) nach Anspruch 1 oder 2, **dadurch gekennzeichnet, dass** die Abstandhalter (21,21') als durch die Z-Schienen (15',15) der Nachbarstangen (8',8) beaufschlagbare Rollelemente ausgebildet sind.

8. Vorrichtung (1) nach einem der Ansprüche 4 bis 7, **dadurch gekennzeichnet, dass** die Abstandhalter (21,21') in Z-Richtung verlaufende Vertiefungen (22,22') aufweisen, welche an das Profil der Z-Schienen (15',15) der Nachbarstangen angepasst sind, so dass diese Z-Schienen (15',15) im wesentlichen spielfrei in diesen Vertiefungen (22,22') liegen, wenn sich das Paket (23) der Zahnstangen (8,8') in der Kompaktstellung mit minimalem Achsabstand (6) befindet.

9. Vorrichtung (1) nach einem der Ansprüche 1 oder 3, **dadurch gekennzeichnet, dass** die Abstandhalter (31,31',31") Rückhaltestege (32) umfassen, welche in einer bestimmten gegenseitigen Z-Position von zwei benachbarten Zahnstangen (8,8') in den Zwischenraum (28,28') der U-Schiene (30',30) der Nachbarstange (8',8) einfahrbar sind.

10. Vorrichtung (1) nach einem der vorhergehenden Ansprüche, **dadurch gekennzeichnet, dass** die Abstandhalter (21,21', 31,31',31") im Bereich der Enden (24,24') der Zahnstangen (8,8') angeordnet sind.

11. Vorrichtung (1) nach einem der Ansprüche 1 bis 10, **dadurch gekennzeichnet, dass** die Abstandhalter (21,21', 31,31',31") zumindest um annähernd den Betrag des Z-Verfahrweges (9) der Zahnstangen (8,8') von deren Enden (24,24') entfernt angeordnet sind.

12. Vorrichtung (1) nach einem der Ansprüche 1 bis 10, **dadurch gekennzeichnet, dass** die Abstandhalter (21,21', 31,31',31") im Bereich zwischen den Enden (24,24') der Zahnstangen (8,8') und der um den Betrag des Z-Verfahrweges (9) der Zahnstangen (8,8') von deren Enden (24,24') entfernten Punkten (25,25) angeordnet sind.

13. Vorrichtung (1) nach einem der vorhergehenden Ansprüche, **dadurch gekennzeichnet, dass** die Abstandhalter (21,21') zumindest über einen Teil der Länge der Zahnstangen (8,8') verschiebbar sind.

14. Vorrichtung (1) nach einem der vorhergehenden Ansprüche, **dadurch gekennzeichnet, dass** sie Kämme (26,26') umfasst, welche sich im wesentlichen in Y-Richtung erstrecken, wobei diese Kämme (26,26') Finger (27,27') umfassen, welche in ihrer Dimension zumindest teilweise an sich in Z-Richtung erstreckende Zwischenräume (28,28') der Zahnstangen (8,8') bzw. an Räume zwischen den Zahnstangen angepasst sind und welche durch Drehung der Kämme (26,26') um ihre Achse (29,29') bzw. durch manuelles Einschieben in diese Zwischenräume (28,28') eingreifen.

15. Vorrichtung (1) nach einem der vorhergehenden Ansprüche, **dadurch gekennzeichnet, dass** der Y-Antrieb (20) von zwei Seiten auf das Zahnstangenpaket (23) einwirkt und so ausgebildet ist, dass er in der Kompaktstellung der Zahnstangen (8,8') permanent von beiden Seiten eine definierte Kraft in Y-Richtung auf die Zahnstangen (8,8') ausübt.

16. Vorrichtung (1) nach einem der vorhergehenden Ansprüche, **dadurch gekennzeichnet, dass** der Achsabstand (6) der Zahnstangen (8,8') in der Kompaktstellung des Zahnstangenpakets (23) dem Gitterabstand (12) der Wells (13) einer Mikroplatte (14) mit 96, mit 384 oder mit 1536 Wells entspricht.

17. Vorrichtung (1) nach einem der vorhergehenden Ansprüche, **dadurch gekennzeichnet, dass** die Objekte (2) ausgewählt sind aus einer Gruppe, die Referenzspitzen, Dispenserspitzen, Pipettenspitzen, Elektroden, Temperatur-Fühler, pH-Sonden und optische Fasern umfasst.

18. Liquid-Handling-System mit mindestens einer Arbeitsfläche (5), **dadurch gekennzeichnet, dass** es zumindest eine Vorrichtung (1) gemäss einem oder mehreren der vorhergehenden Ansprüche umfasst.

## Claims

1. Device (1) for positioning at least two objects (2) extending essentially parallel to each other and vertically along a Z axis opposite to wells (13) in an essentially horizontally positioned microplate (14), such that each of these objects (2) is taken up individually on its respective rack (8,8') and these racks (8,8'):
• are oriented essentially in the same direction as the objects (2) and are arranged side by side along the direction of an essentially horizontal Y axis (7) at a centre distance (6);
• are made so as to be individually movable in an essentially vertical direction along a Z-direction path (9), each one being individually engaged with a motor-driven pinion (10,10') of a Z drive (11), the pinion exerting pressure on its respective rack (8,8');
• comprise two Z rails (15,15') laterally protruding in the Y direction and extending in the Z direction, supported able to slide in Z guides (16,16') of a cage (17,17') carrying each individual pinion (10,10');
• are arranged alternately next to each other along the essentially horizontally extending Y axis (7), each together with its allocated cage (17,17'), so that the cages (17,17') lie alternately one in front of and one behind the Y axis (7);
whereby the Z rails (15,15') of the racks (8,8') oriented in the same direction are arranged in an essentially horizontal line (18,18') running parallel to the axis (7) and between the latter and the teeth (19,19') of the racks (8,8');
and whereby the centre distance (6) of the racks (8,8') in the Y direction can be varied by Y drives (20) and the block of racks (23) can be brought into compact format with a minimum centre distance (6) essentially corresponding with the grid interval (12) of the wells (13) in this microplate (14),
**characterized in that** at least every other rack (8,8') comprises spacers (21,21',31,31',31") arranged on it that can be impinged upon by the Z-rails (15,15') of the adjacent racks (8,8'), each spacer being attached to only one rack (8,8'), whereby in the compact format of the block of racks (23), these spacers (21,21',31,31',31") are impinged upon by at least one of the rails (15,15',30,30') extending in the Z direction of the adjacent racks (8,8'), thereby defining the minimum centre distance (6).

2. Device (1) according to Claim 1, **characterized in that** each rack (8,8') comprises spacers (21,21') arranged on it, which in the compact format of the block of racks (23) are each impinged upon by a Z rail (15,15') of the adjacent racks (8,8') in order to define the minimum centre distance (6).

3. Device (1) according to Claim 1, **characterized in that** each rack (8,8') comprises spacers (31,31',31") arranged on it, which in the compact format of the block of racks (23) are each engaged by a U rail (30',30) of the adjacent racks (8,8') in order to define the minimum centre distance (6).

4. Device (1) according to Claim 1 or 2, **characterized in that** the spacers (21,21') are made in the form of fixed elements that can be impinged upon by the sliding Z rails (15,15') of the racks (8,8').

5. Device (1) according to Claim 4, **characterized in that** the spacers (21,21') are cuboid in shape on their front surface in order to make linear contact with a Z rail (15,15').

6. Device (1) according to Claim 4, **characterized in that** the spacers (21,21') are cylindrical in shape on their front surface in order to make point contact with a Z rail (15,15').

7. Device (1) according to Claim 1 or 2, **characterized in that** the spacers (21,21') are made in the form of rotating elements that can be impinged upon by the Z rails (15, 15') of the adjacent racks (8, 8') by.

8. Device (1) according to any one of Claims 4 to 7, **characterized in that** the spacers (21,21') display recesses (22,22') running in the Z direction and that fit the profile of the Z rails (15,15') of adjacent racks so that the Z rails (15,15') lie essentially free of play in these recesses (22,22') when the block (23) of racks (8,8') is in compact format with minimum centre distance (6).

9. Device (1) according to one of Claims 1 or 3, **characterized in that** the spacers (31,31',31") comprise retaining ridges (32), which in a certain relative position in the Z direction of two adjacent racks (8,8') can be introduced into the interstice (28,28') of the U rail (30,30') of the neighbouring rack (8,8').

10. Device (1) according to any one of the above Claims, **characterized in that** the spacers (21,21',31,31',31") are arranged in the neighbourhood of the ends (24,24') of the racks (8,8').

11. Device (1) according to any one of Claims 1 to 10, **characterized in that** the spacers (21,21',31,31',31") are located at a distance from the ends (24,24') of the racks (8,8') at least approximately equal to the distance of travel in the Z direction of the racks (8,8').

12. Device (1) according to any one of Claims 1 to 10, **characterized in that** the spacers (21,21',31,31',31") are located in the zone between the ends (24,24') of the racks (8,8') and the points (25,25') distant from ends (24,24') of the racks (8,8') by the length of the Z-direction travel (9) of the racks (8,8').

13. Device (1) according to any one of the above Claims, **characterized in that** the spacers (21,21') can be moved along at least a part of the length of the racks (8,8').

14. Device (1) according to any one of the above Claims, **characterized in that** it comprises combs (26,26') extending essentially in the Y direction, these combs (26,26') comprising fingers (27,27'), which in their dimensions are at least partially matched to interstices (28,28') of the racks (8,8') extending in the Z direction or to spaces between the racks, and which, by rotation of the combs (26,26') about their axes (29,29') or by manual insertion, engage with these interstices (28,28').

15. Device (1) according to any one of the above Claims, **characterized in that** the Y drive (20) operates upon the block of racks (23) from two sides and is so constructed that in the compact format of the racks (8,8') it applies a permanent defined force in the Y direction from both sides on the racks (8,8').

16. Device (1) according to any one of the above Claims, **characterized in that** the centre distance (6) of the racks (8,8') in the compact format of the block of racks (23) corresponds to the grid interval (12) of the wells (13) of a microplate (14) with 96, 384 or 1536 wells.

17. Device (1) according to any one of the above Claims, **characterized in that** the objects (2) selected belong to a group comprising reference tips, dispenser tips, pipette tips, electrodes, temperature sensors, pH probes and optical fibres.

18. Liquid handling system with at least one working surface (5), **characterized in that** it comprises at least one device (1) according to one or more of the above Claims.

## Revendications

1. Dispositif (1) de positionnement d'au moins deux objets (2) s'étendant essentiellement parallèlement l'un à l'autre et alignés verticalement dans une direction Z par rapport à des puits (13) d'une plaque de microtitration (14) disposée essentiellement horizontalement, chacun de ces objets (2) étant logé individuellement au niveau d'une crémaillère (8,8'), et ces crémaillères (8,8') :
■ étant alignées essentiellement comme ces objets (2) et étant disposées les unes à côté des autres le long d'un axe (7) s'étendant essentiellement horizontalement dans une direction Y, selon un écart axial (6);
■ étant formées individuellement pour se déplacer essentiellement verticalement sur une trajectoire de déplacement Z (9), en ce qu'elles sont en prise avec un pignon (10,10') d'un entraînement Z (11) entraîné individuellement par un moteur respectif et exerçant une force de pression sur la crémaillère (8,8') respective;
■ comportant deux rails Z (15,15') dépassant latéralement dans la direction Y et s'étendant dans la direction Z, lesquels sont logés pour pouvoir glisser dans des glissières Z (16,16') d'une cage (17,17') coordonnée portant le pignon individuel (10,10');
■ avec la cage (17,17') respectivement coordonnée, étant disposées les unes à côté des autres en alternance le long de l'axe (7) s'étendant essentiellement horizontalement dans la direction Y, de façon telle que les cages (17,17') se trouvent en alternance devant ou derrière l'axe (7);
dans lequel les rails Z (15,15') des crémaillères (8,8') orientées à l'identique sont respectivement disposés sur une ligne essentiellement horizontale (18,18') qui s'étend parallèlement à l'axe (7) et entre celui-ci et les dents (19,19') des crémaillères (8,8');
et dans lequel l'écart axial (6) des crémaillères (8,8') peut varier dans la direction Y au moyen de l'entraînement Y (20), et l'ensemble à crémaillères (23) peut être amené dans une position compacte avec un écart axial minimum (6) qui correspond essentiellement à l'écartement de grille (12) des puits (13) de cette plaque de microtitration,
**caractérisé en ce qu'**au moins une crémaillère (8,8') sur deux comprend des écarteurs (21,21',31,31',31") disposés dessus et pouvant être chargés par les rails Z (15',15) des crémaillères voisines (8,8'), parmi lesquels chacun est fixé uniquement à une crémaillère (8,8'), ces écarteurs (21,21',31,31',31") étant chargés dans la position compacte des ensembles à crémaillère (23) au moins par un rail (15',15,30,30') des crémaillères voisines (8',8) s'étendant dans la direction Z pour définir l'écart axial minimum (6).

2. Dispositif (1) selon la revendication 1, **caractérisé en ce que** chaque crémaillère (8,8') comporte des écarteurs (21,21') disposés sur celle-ci et qui, dans la position compacte de l'ensemble à crémaillères (23) sont chargés respectivement par un des rails Z (15',15) des crémaillères voisines (8,8') afin de définir l'écart axial minimum (6).

3. Dispositif (1) selon la revendication 1, **caractérisé en ce que** chaque crémaillère (8,8') comporte des écarteurs (31,31',31") disposés sur celle-ci et qui, dans la position compacte de l'ensemble à crémaillères (23) sont chargés en prise avec respectivement un rail en U (30',30) des crémaillères voisines (8,8') afin de définir l'écart axial minimum (6).

4. Dispositif (1) selon l'une des revendications 1 ou 2, **caractérisé en ce que** les écarteurs (21,21') sont formés en tant qu'éléments fixés pouvant être chargés par glissement avec les rails Z (15',15) des crémaillères voisines (8',8).

5. Dispositif (1) selon la revendication 4, **caractérisé en ce que** les écarteurs (21,21') sont réalisés en forme de parallélépipède en vue frontale pour former un contact par ligne avec un rail Z (15,15').

6. Dispositif (1) selon la revendication 4, **caractérisé en ce que** les écarteurs (21,21') sont réalisés en forme de cylindre en vue frontale pour former un contact par points avec un rail Z (15',15).

7. Dispositif (1) selon la revendication 1 ou 2, **caractérisé en ce que** les écarteurs (21,21') sont réalisés en tant qu'éléments de roulement pouvant être chargés par les rails Z (15',15) des crémaillères voisines (8',8).

8. Dispositif (1) selon l'une des revendications 4 à 7, **caractérisé en ce que** les écarteurs (21,21') présentent des creux (22,22') s'étendant dans la direction Z, et qui sont adaptés au profil des rails Z (15',15) des crémaillères voisines, si bien que ces rails Z (15',15) reposent essentiellement sans jeu dans ces creux (22,22') lorsque l'ensemble (23) des crémaillères (8,8') se trouve dans la position compacte avec l'écart axial minimum (6).

9. Dispositif (1) selon l'une des revendications 1 ou 3, **caractérisé en ce que** les écarteurs (31,31',31") comportent des tiges de retenue (32) qui peuvent être introduites dans une position Z réciproque définie de deux crémailières voisines (8,8'), dans l'espace intermédiaire (28,28') des rails en U (30',30) de la crémaillère voisine (8',8).

10. Dispositif (1) selon l'une des revendications précédentes, **caractérisé en ce que** les écarteurs (21,21',31,31',31") sont disposés dans la zone des extrémités (24,24') des crémaillères (8,8').

11. Dispositif (1) selon l'une des revendications 1 à 10, **caractérisé en ce que** les écarteurs (21,21',31,31',31") sont disposés en étant éloignés d'au moins approximativement le montant de la trajectoire de déplacement Z (9) des crémaillères (8,8') à leurs extrémités (24,24').

12. Dispositif (1) selon l'une des revendications 1 à 10, **caractérisé en ce que** les écarteurs (21,21',31,31',31") sont disposés dans la zone entre les extrémités (24,24') des crémaillères (8,8') et les points (25,25') éloignés de leurs extrémités (24,24') du montant de la trajectoire de déplacement Z (9) des crémaillères.

13. Dispositif (1) selon l'une des revendications précédentes, **caractérisé en ce que** les écarteurs (21,21') peuvent être déplacés au moins sur une partie de la longueur des crémaillères (8,8').

14. Dispositif (1) selon l'une des revendications précédentes, **caractérisé en ce qu'**il comprend des peignes (26,26') qui s'étendent essentiellement dans la direction Y, ces peignes (26,26') comportant des doigts (27,27') qui sont adaptés dans leur dimension au moins partiellement aux espaces intermédiaires (28,28') des crémaillères (8,8') s'étendant dans la direction Z ou aux espaces entre les crémaillères et qui s'insèrent dans ces espaces intermédiaires (28,28') par pivotement des peignes (26,26') autour de leur axe (29,29') ou par introduction manuelle.

15. Dispositif (1) selon l'une des revendications précédentes, **caractérisé en ce que** l'entraînement Y (20) agit depuis deux côtés sur l'ensemble à crémaillères (23) et est réalisé de façon telle que, dans la position compacte des crémaillères (8,8'), il exerce de façon permanente sur les crémaillères (8,8') une force définie dans la direction Y, des deux côtés.

16. Dispositif (1) selon l'une des revendications précédentes, **caractérisé en ce que** l'écart axial (6) des crémaillères (8,8') dans la position compacte de l'ensemble à crémaillères (23) correspond à l'écartement de grille (12) des puits (13) d'une plaque de microtitration (14) comportant 96, 384 ou 1536 puits.

17. Dispositif (1) selon l'une des revendications précédentes, **caractérisé en ce que** les objets (2) sont sélectionnés dans un groupe qui comprend des pointes de référence, des pointes de distributeur, des pointes de pipette, des électrodes, des capteurs de température, des sondes de pH et des fibres optiques.

18. Système de manipulation de liquide comportant au moins une surface de travail (5), **caractérisé en ce qu'**il comprend au moins un dispositif (1) selon une ou plusieurs des revendications précédentes.
